# EUROPEAN PATENT SPECIFICATION

(11) **EP 3 095 726 B1**
(45) Date of publication and mention of the grant of the patent: **03.01.2018**
(21) Application number: 16170751.8
(22) Date of filing: 20.05.2016
(51) Int. Cl.: B65D 81/18, A61G 12/00, B60P 1/54, B64D 11/00, B66F 7/06, F25D 3/12

(54) **DEVICE FOR LOADING AND UNLOADING ISOTHERMAL CONTAINERS FOR TRANSPORTING FOODSTUFFS**
VORRICHTUNG ZUM BELADEN UND ENTLADEN ISOTHERMISCHER BEHÄLTER ZUM TRANSPORT VON LEBENSMITTELN
DISPOSITIF DE CHARGEMENT ET DE DÉCHARGEMENT DE CONTENEURS ISOTHERMES POUR TRANSPORTER DES ALIMENTS

(30) Priority: 21.05.2015 IT UB20150881
(43) Date of publication of application: 23.11.2016
(73) Proprietor: Westmont Investments Sp. z o.o., 53-017 Wroclaw (PL)
(72) Inventor: MONETTI, Alberto, I-12035 Racconigi (Cuneo) (IT)
(74) Representative: Buzzi, Franco

(56) References cited:
- EP-A2- 0 252 273
- WO-A1-03/093055
- WO-A1-2008/070835
- US-A- 4 288 195
- US-B1- 6 431 319

## Description

### Field of the invention

The present invention generally refers to the transport of foodstuffs in the large scale retail industry, by means of isothermal containers.

Typically, isothermal containers thus made, provided with a front door, are prearranged for receiving the foodstuffs piece by piece in a totally manual fashion, or accumulated in wheeled baskets or pallets. In this case, forklifts are usually employed for loading and unloading the wheeled baskets or pallets relative to the isothermal containers. This gives rise to complications and even risk of damaging the containers during the loading and unloading operations.

### State of the art

Document WO-2008/0708835 discloses a block used for preparing and storing foodstuffs for transport vehicles such as trains, buses and aeroplanes, comprising a platform adapted to raise or lower a foodstuffs or beverage carriage to be inserted into the block. The platform is movable vertically and horizontally but it cannot be rotated, and the block is made up of an open framework and not by a closed isothermal container.

Documents US-6431319 and US-6431319 describe raising decks displaceable vertically by means of a pantograph structure arranged on wheels.

EP-0252273 describes a device for loading and unloading palletised goods applied to a truck or even to an isothermal container, comprising a motorised carriage displaceable horizontally to move a vertically displaceable fork platform. The loading and unloading device is carried by the upper wall of the truck and requires the intervention of motorised actuators, constituted by three telescopic hydraulic cylinders, for retracting and stowing the forks.

WO-03/093055 regards a vehicle with a vertically and horizontally movable loading platform. Support guides are installed on a lateral wall of the vehicle and a motorised actuator is provided to allow lifting and stowing the platform in the vehicle even in this case.

The known solutions are complex and costly.

### Summary the invention

The object of the present invention is overcome the aforementioned drawback. This object is attained by means of an isothermal container for transporting foodstuffs equipped with a loading and unloading device according to claim 1.

Thanks to this solution idea, the loading and unloading device allows the isothermal container according to the invention to be able to perform the loading, entry, exit and unloading of the wheeled basket or the like in an entirely autonomous manner, i.e. without requiring external handling apparatus.

### Brief description the drawings

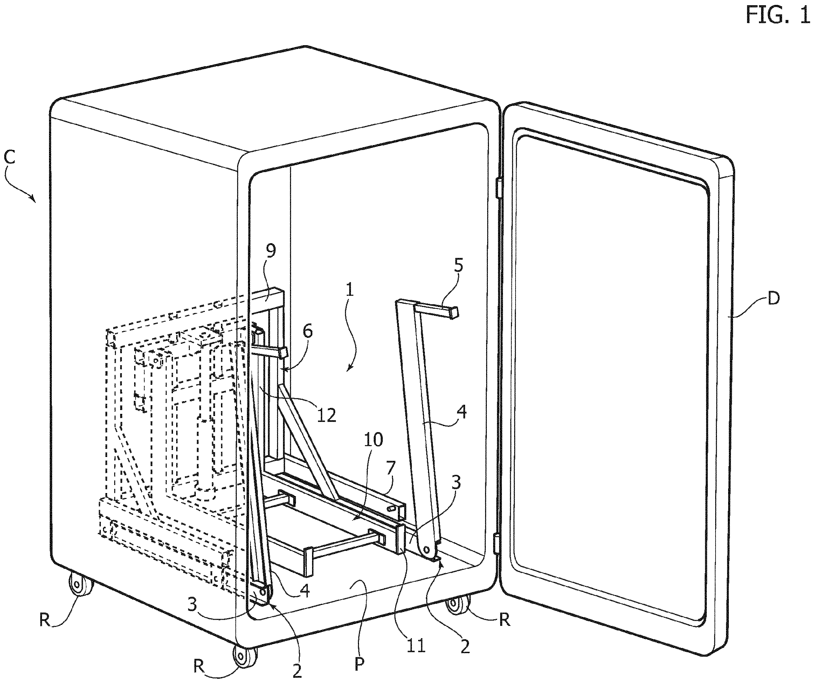

Now, the invention will be described in detail with reference to figures 1 to 10 of the attached drawings, which schematically prospectively represent the device for loading and unloading the isothermal container according to the invention in the various operative configurations thereof.

### Detailed description the invention

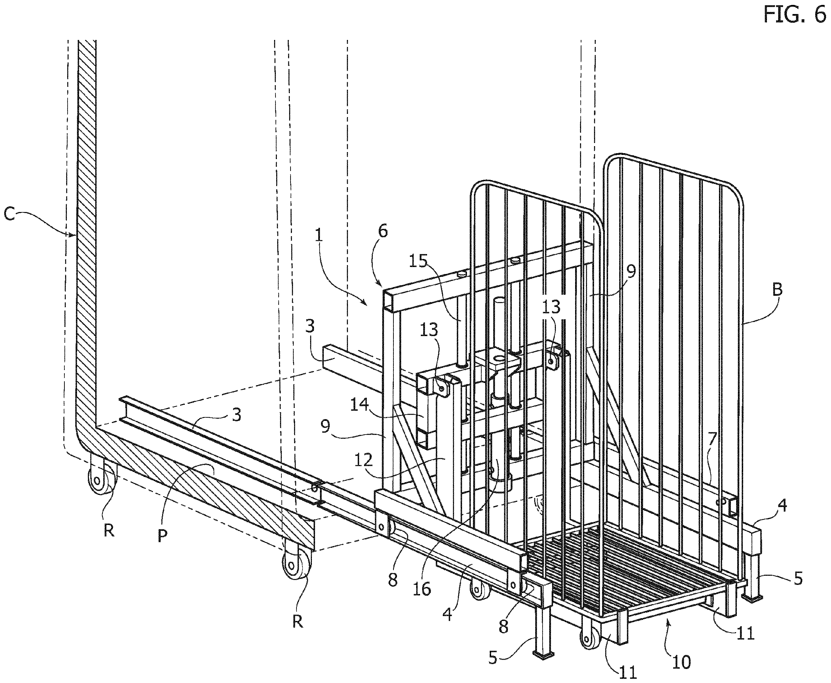

Initially with reference to figure 1, an isothermal container of the conventional type, having a structure with heat insulated walls and whose bottom wall P is provided with feet or wheels R at the bottom part, is generally indicated with C. The container C is provided with a front door, indicated with D, through which foodstuffs carried by a conventional wheeled basket, indicated with B in figures 6 to 8, can be introduced and removed with respect to the isothermal container C.

According to the invention, the isothermal container C is equipped with a loading and unloading device - indicated in its entirety with 1 - through which the wheeled basket B can be introduced and removed autonomously, i.e. without requiring a forklift.

The loading and unloading device 1 is made up of the following elements:
- a pair of guides 2 applied to the isothermal container C and each including a stationary horizontal section 3, permanently fixed to the bottom wall P of the container C, and a movable section 4 connected to the front end of the stationary section 3 so as to be able to rotate between the raised position represented in figures 1 and 2, in which it is contained substantially vertically in the container C, and a lowered position represented in figures 3 to 7, in which it extends horizontally outside the container C, on the extension of the respective fixed section 3. Each movable section 4 is provided, at the free end thereof, with a foot 5 for resting against the ground in the lowered condition;
- a support structure, generally indicated with 6 and including a horizontal lower framework 7 provided with wheels 8 movable along the guides 2, and a rear vertical portal 9 rigidly fixed to the horizontal framework 7;
- a fork platform 10 having a front portion 11 normally arranged in the horizontal framework 7 of the support structure 6, and an upright rear structure 12 articulated at the upper part, by means of horizontal pins 13, to a slide 14 movable along two vertical columns 15 for guiding the rear portal 9 of the support structure 6.

An actuator, constituted in the case of the illustrated example by a hydraulic or pneumatic cylinder, through which the slide 14, and thus the fork platform 10, is displaceable vertically with respect to the support structure 6, and thus with respect to the bottom wall P of the isothermal container C, as described in detail hereinafter, is indicated with 16.

It should be observed that the actuator 16 could also be of the electrical or mechanical type: in any case, the source of power for the actuation thereof, whether of the fluid or electrical type, is preferably though not necessarily external with respect to the loading and unloading device 1 according to the invention: such source may normally be available at the place (distribution centre) from which the isothermal container C is transported to the sales point.

With reference to the various steps represented in sequence in the figures, the loading and unloading device 1 according to the invention operates as follows.

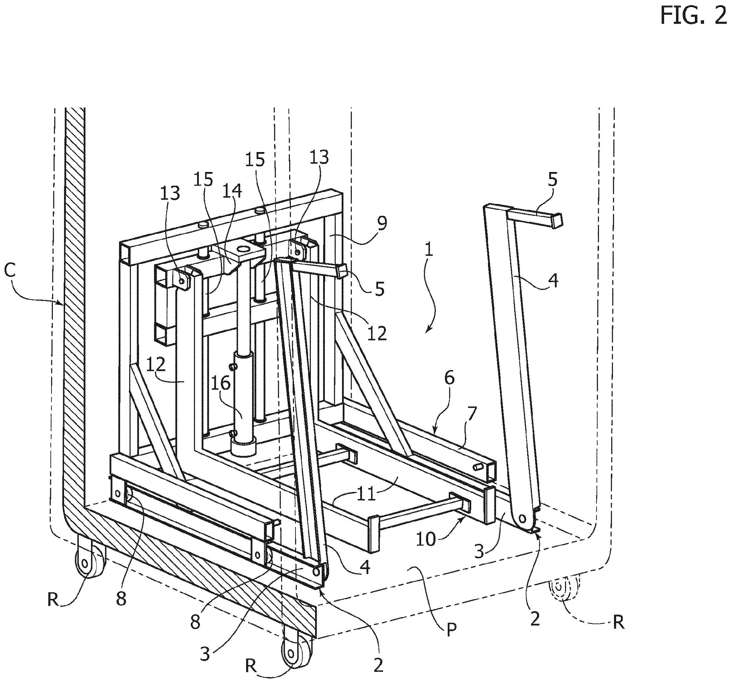

Figure 1 shows the situation where the loading and unloading device 1 is stowed in the container C, with the movable portions 4 of the guides 2 raised, the support structure 6 retracted and the fork platform 7 arranged horizontally and in raised position. The same situation is represented in figure 2.

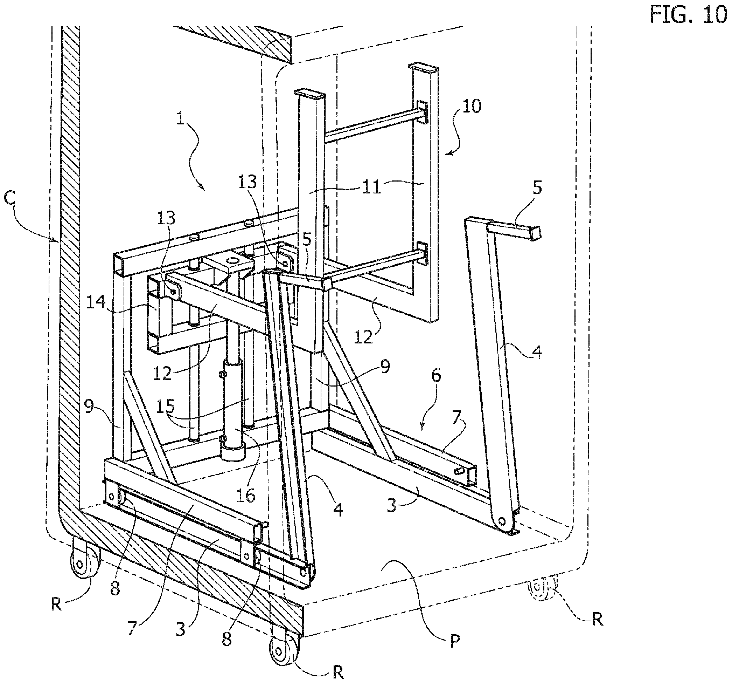

Alternatively, the condition in absence of the wheeled basket B may be the one represented in figure 10, in which the fork platform 7 is rotated upwards. In this case, the slide 14 will be arranged in lowered position.

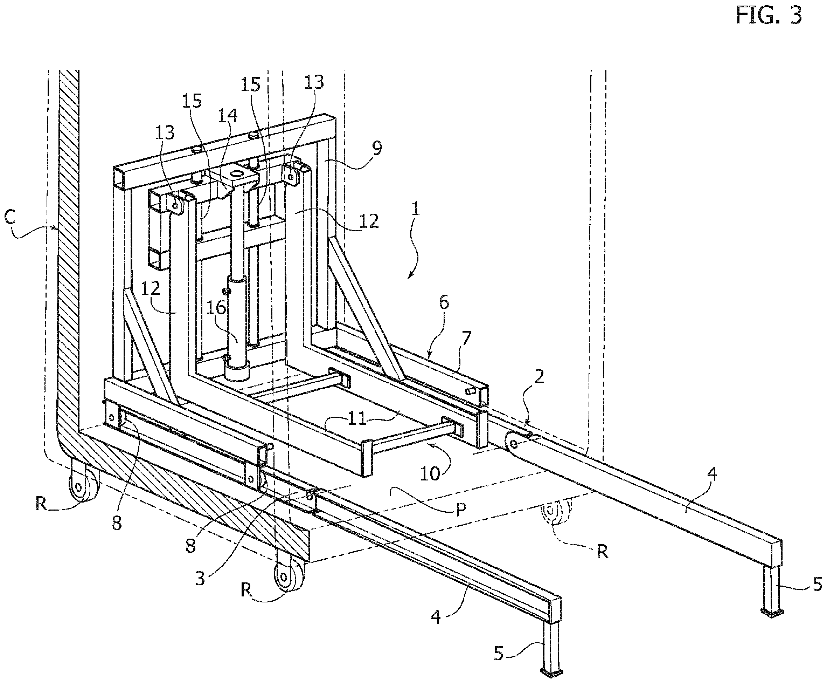

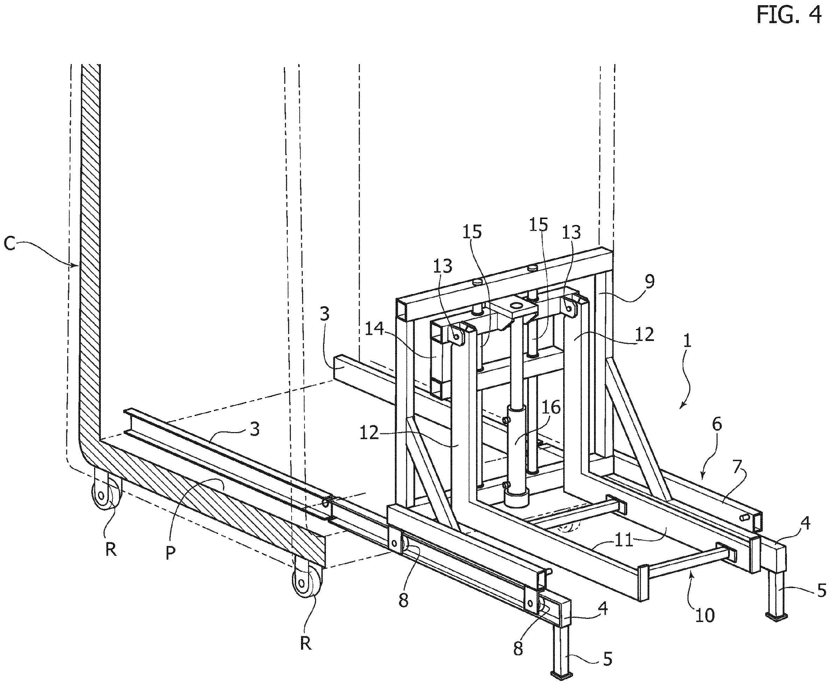

Starting from the condition of figures 1 and 2, picking up a wheeled basket B and introducing it into the isothermal container C firstly requires rotating the movable portions 4 of the guides 2 to the lowered position illustrated in figure 3, and then manually moving the support structure 6 towards the position extracted from the isothermal container C, by rolling the wheels 8 along the stationary sections 3 and the movable sections 4 of the guides 2 as shown in figure 4. This may be easily carried out manually, until the entire support structure 6 is arranged outside the isothermal container C, in front of the bottom wall P thereof.

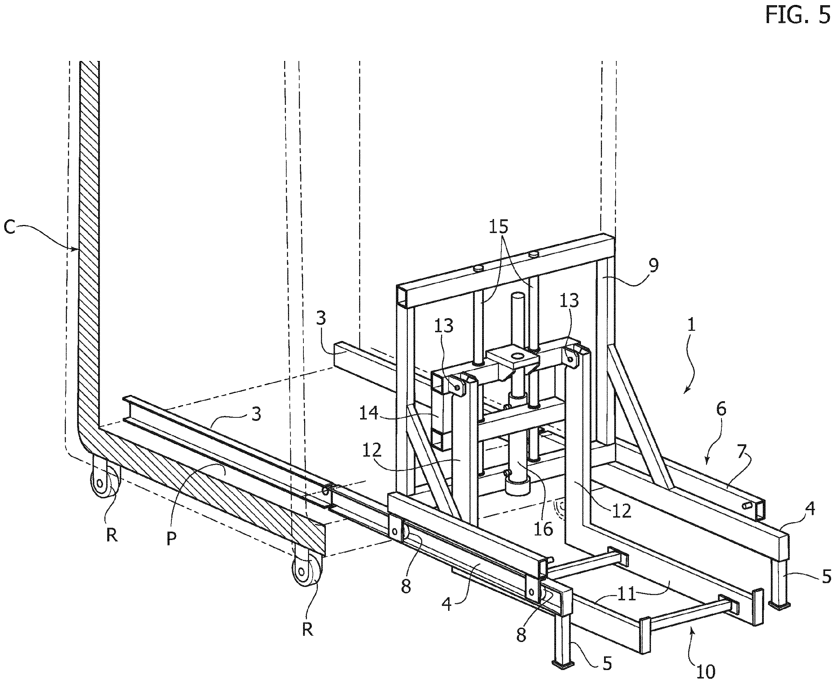

The subsequent step, represented in figure 5, consists of commanding the lowering of the fork platform 7, positioning it at a lower height with respect to that of the bottom wall P of the isothermal container C. This operation may be achieved by actuating the actuator 16 or, should the external source of power not be available, even simply by gravity, so as to lower the slide 14 along the vertical columns 15 for guiding the rear portal 9 of the support structure 6.

On the contrary, if the initial position is the one represented in figure 10, with the fork platform 7 rotated upwards and the slide 14 lowered, following the unfolding of the movable portions 4 of the guides 2, all that is required is to simply remove the support structure 6 with the slide 14 lowered, and then downwardly rotate the fork platform 7, which will thus be ready to receive the wheeled basket B.

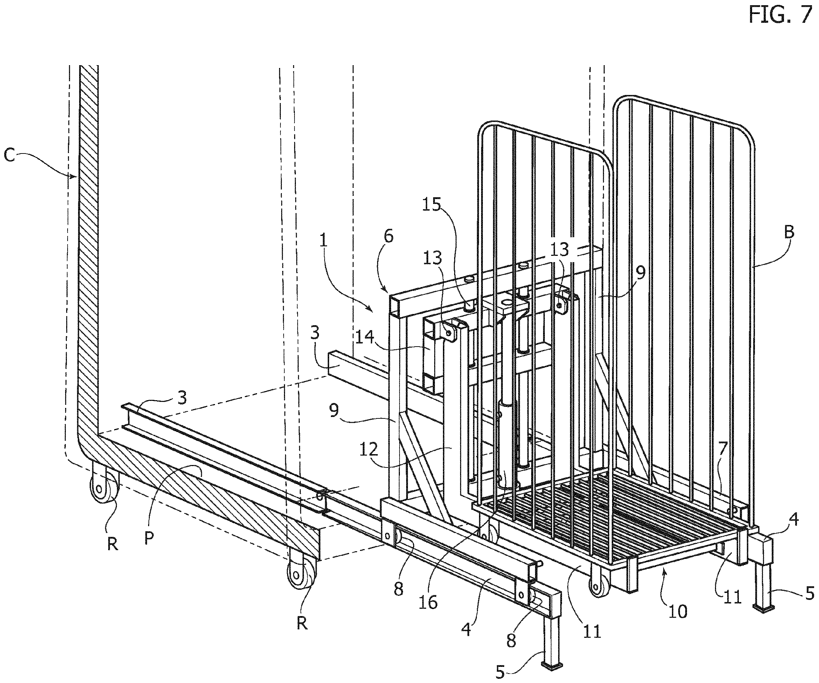

Thus, in both cases the wheeled basket B can be positioned on the fork platform 7, as represented in figure 6, and then raised returning the platform 7 above the level of the bottom wall P of the isothermal container C, as represented in figure 7. This operation is usually carried out by actuating the actuator 16.

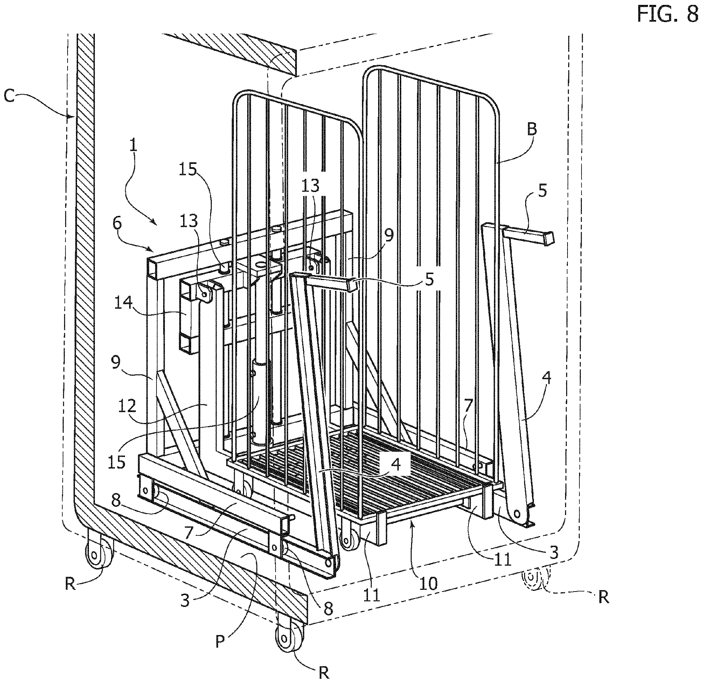

Lastly, the support structure 6 with the wheeled basket B, is pushed to return into the isothermal container C, as illustrated in figure 8, and the movable portions 4 of the guides 2 are returned to the raised position.

Obviously, the unloading of the wheeled basket B is carried out by performing the operations described above in the reverse order.

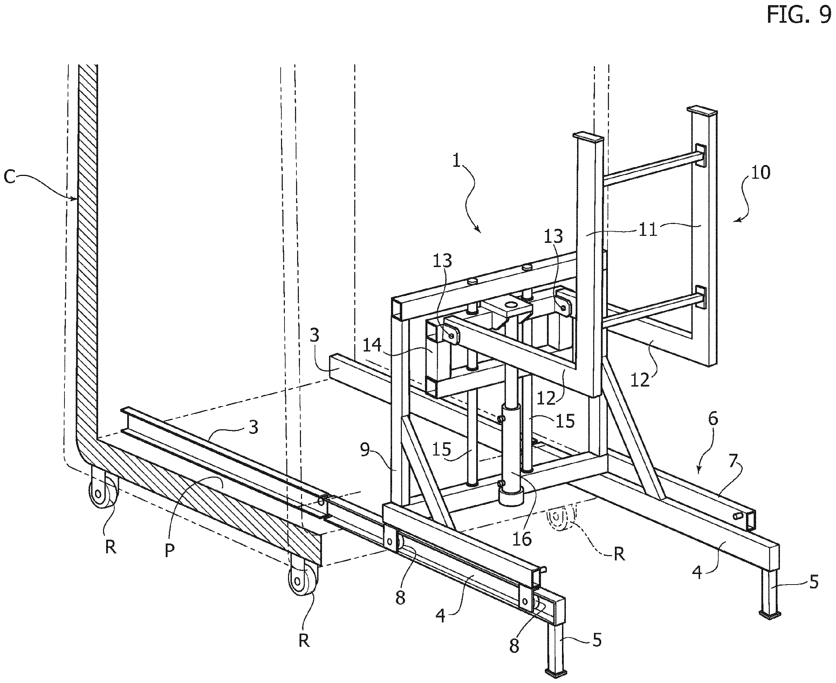

In the light of the above, it is clear that the articulation between the uprights 12 of the fork platform 7 and the rear portal 9 of the support structure 6 by means of pins 13, has the function of easily allowing the stowing of such fork platform 7 into the isothermal container C even in case of lack of source of power for actuating the actuator 16. In such event, the fork platform 7 can be tilted to the aforementioned raised position, represented in figure 9, after which the support structure 6 can be returned into the container C as previously described, as represented in figure 10.

In brief, the loading and unloading device according to the invention features three movements:
- a movement parallel and horizontal to the ground so as to allow the entry and exit of the wheeled basket containing the foodstuffs,
- a vertical movement, orthogonal to the ground so as to allow the lifting of the wheeled basket during the loading and descent thereof when unloading,
- a 90° rotational movement of the fork platform, after unloading, with the aim of repositioning the entire device into the container C without requiring the actuation of the actuator 16.

Obviously, the construction details and the embodiments may widely vary with respect to what has been described and illustrated, without departing from the scope of protection of the present invention as described in the claims that follow. Thus, though the outlined description refers to the loading and unloading of a wheeled basket, the invention is equally advantageously applicable to cases where the foodstuffs are carried by a simple pallet or the like.

## Claims

1. Isothermal container (C) for transporting foodstuffs, equipped with a loading and unloading device (1), **characterized in that** the loading and unloading device (1) consists of a support structure (6) configured to be installed on the bottom (P) of the isothermal container (C) to autonomously operate the entry and exit of a wheeled basket (B) or the like conventionally employed for handling the foodstuffs, said support structure (6) being manually displaceable horizontally along guides (2) between a retracted position and an extracted position relative to the isothermal container (C), said guides (2) having a stationary section (3) and a movable section (4) rotatable between a raised inoperative position and a lower operative position, said support structure (6) bearing a fork platform (10) vertically displaceable, in said extracted position of the support structure (6), between a lowered and a raised position by an actuator (16), and **in that** said fork platform (10) is pivotally connected to the support structure (6) between a horizontal operative position and an upwardly tilted inoperative position for stowing the support structure (6) back in the isothermal container (C) without intervention of said actuator (16).

2. Isothermal container according to claim 1, **characterized in that** the support structure (6) is equipped with a motorized actuator (16) for the vertical displacement of the fork platform (7).

3. Isothermal container according to claim 2, **characterized in that** said motorized actuator (16) is operable by an external power source.

## Patentansprüche

1. Isothermischer Behälter (C) zum Transport von Lebensmitteln, ausgerüstet mit einer Belade- und Entladevorrichtung (1), **dadurch gekennzeichnet, dass** die Belade- und Entladevorrichtung (1) aus einer Stützkonstruktion (6) besteht, die so ausgestaltet ist, dass sie auf dem Boden (P) des isothermischen Behälters (C) installiert wird, um den Eintritt und Austritt eines fahrbaren Korbs (B) oder dergleichen, herkömmlicherweise eingesetzt für die Handhabung der Lebensmittel, selbstständig zu betreiben, wobei die Stützkonstruktion (6) manuell entlang von Führungen (2) zwischen einer eingezogenen Stellung und einer ausgezogenen Stellung in Bezug auf den isothermischen Behälter (C) horizontal verschiebbar ist, wobei die Führungen (2) einen ortfesten Abschnitt (3) und einen beweglichen Abschnitt (4), der zwischen einer angehobenen Ruhestellung und einer unteren Betriebsstellung drehbar ist, aufweisen, wobei die Stützkonstruktion (6) eine Gabelplattform (10) trägt, die in der ausgezogenen Stellung der Stützkonstruktion (6) mittels eines Stellantriebs (16) zwischen einer abgesenkten und einer angehobenen Stellung vertikal verschiebbar ist, und dass die Gabelplattform (10) mit der Stützkonstruktion (6) schwenkbar verbunden ist zwischen einer horizontalen Betriebsstellung und einer nach oben gekippten Ruhestellung zum Verstauen der Stützkonstruktion (6) in dem isothermischen Behälter (C) ohne Eingreifen des Stellantriebs (16).

2. Isothermischer Behälter nach Anspruch 1, **dadurch gekennzeichnet, dass** die Stützkonstruktion (6) mit einem motorisierten Stellantrieb (16) zur vertikalen Verschiebung der Gabelplattform (7) ausgerüstet ist.

3. Isothermischer Behälter nach Anspruch 2, **dadurch gekennzeichnet, dass** der motorisierte Stellantrieb (16) durch eine externe Stromquelle betätigbar ist.

## Revendications

1. Conteneur isotherme (C) pour transporter des denrées alimentaires, équipé d'un dispositif de chargement et de déchargement (1), **caractérisé en ce que** le dispositif de chargement et de déchargement (1) se compose d'une structure de support (6) configurée pour être installée au fond (P) du conteneur isotherme (C) pour actionner de manière autonome l'entrée et la sortie d'un panier à roulettes (B) ou similaire utilisé, de manière classique, pour manipuler les denrées alimentaires, ladite structure de support (6) étant manuellement déplaçable de manière horizontale le long de guides (2), entre une position rétractée et une position extraite par rapport au conteneur isotherme (C), lesdits guides (2) ayant une section fixe (3) et une section mobile (4) pouvant tourner entre une position non opérationnelle levée et une position opérationnelle abaissée, ladite structure de support (6) supportant une plateforme à fourche (10) verticalement déplaçable, dans ladite position extraite de la structure de support (6), entre une position abaissée et une position levée par un actionneur (16), et **en ce que** ladite plateforme à fourche (10) est raccordée, de manière pivotante, à la structure de support (6) entre une position opérationnelle horizontale et une position non opérationnelle inclinée vers le haut pour replacer la structure de support (6) dans le conteneur isotherme (C) sans l'intervention dudit actionneur (16).

2. Conteneur isotherme selon la revendication 1, **caractérisé en ce que** la structure de support (6) est équipée avec un actionneur motorisé (16) pour le déplacement vertical de la plateforme à fourche (7).

3. Conteneur isotherme selon la revendication 2, **caractérisé en ce que** ledit actionneur motorisé (16) peut être actionné par une source d'alimentation externe.
